# EUROPEAN PATENT SPECIFICATION

(11) **EP 0 357 352 B1**
(45) Date of publication and mention of the grant of the patent: **01.06.1994**
(21) Application number: 89308650.4
(22) Date of filing: 25.08.1989
(51) Int. Cl.: G11B 27/02, G11B 15/18, G11B 27/024, G11B 15/473

(54) **Video signal recording/reproducing apparatus**
Videosignalaufzeichnungs-/-wiedergabegerät
Appareil d'enregistrement/de reproduction de signaux vidéo

(30) Priority: 30.08.1988 JP 215606/88
(43) Date of publication of application: 07.03.1990
(73) Proprietor: KABUSHIKI KAISHA TOSHIBA, Kawasaki-shi, Kanagawa-ken 210 (JP)
(72) Inventor: Kizu, Shigeo c/o Intellectual Property Division, Minato-ku Tokyo 105 (JP)
(74) Representative: BATCHELLOR, KIRK & CO.

(56) References cited:
- DE-A- 3 822 131
- GB-A- 2 063 526
- US-A- 3 742 132
- US-A- 4 528 603
- PATENT ABSTRACTS OF JAPAN,vol. 9, no. 141 (P-364)15 June 1985 & JP-A-60-020348

## Description

The present invention relates to a video signal recording/reproducing apparatus, and more particularly to such apparatus having an electronic editing function.

In producing a program using a video signal recording/reproducing apparatus, particularly in the fields of broadcasting, advertising and education, tape editing is an important, and sometimes indispensable, work. In present video signal recording/reproducing apparatus, it is typical to use a rotary head type video recorder (VTR) for effecting data recording/reproducing on a magnetic tape by video heads provided on the circumference of a rotary drum. Most of these VTRs have an editing function.

The editing operation in a video tape recorder has been called "Electronic Edit". This electronic editing operation is carried out in principle by erasing portions of video and audio signals, which have already been recorded on a magnetic tape, and then recording new video and audio signals on the erased region of the magnetic tape.

If the editing is performed as described above, discontinuity of signals takes place, principally before and after the editing start point. In particular, phase discontinuity of the video signals causes disturbance of synchronisation and deterioration in the quality of the video image. In order to reduce the phase discontinuity that is caused by editing, a method to servo-control the rotation phases of the rotary drums may be used so that the phase of a vertical synchronous signal of video signals reproduced by a recording head during the reproducing period before the editing start point substantially coincides with the phase of a vertical synchronous signal of the input video signals to be recorded during editing.

The timing of the video signals reproduced by the recording heads indicates the rotating phase of the recording heads. If the rotation phase of the rotary drum is servo-controlled so that phases of the vertical synchronous signals from video signals reproduced by the recording heads during the reproduction period before the editing start point becomes almost the same as that of the vertical synchronous signals separated from input video signals, the phases of signals recorded on a magnetic tape before the editing start point and those of signals newly recorded after the editing start point become substantially the same. Therefore, it becomes possible to minimise the disturbance during reproduction of video images before and after the editing start point.

The method described above is effective on a VTR that is reproducing signals using the recording heads. However, this method is not applicable to those VTRs that do not reproduce signals with the recording heads, that is, a type of VTR which has at least one recording head for recording only and at least one head for reproducing. This is because the timing of video signals reproducing by the reproducing head does not represent rotation phases of the recording head as the recording head and the reproducing head are mounted at staggered positons in the rotation direction of the rotary drum (that is, the recording head and the reproducing head are mounted at different mounting angles on the rotary drum).

As described above, this creates a problem with the conventional technology. It is difficult to get phase continuity of video signals before and after the editing start point on a magnetic tape through servo-control of the rotation of the rotary drum. To cause the phase of vertical synchronous signals of the video signals reproduced by the recording heads before the editing start point to almost coincide with phases of vertical synchronous signals of input video signals to be recorded at the time of editing is not possible in a VTR of the above type because its recording head is for recording only and reproduction is performed by another head.

Patent Abstracts of Japan, Vol. 9, no 141, (P-364), 15.06.85 (JP.A-60020348), on which document the preamble of claim 1 is based, discloses a VTR with a reproduction head placed behind the recording head on a different height so that a previous track is scanned simultaneously with the recording by the recording head. This allows monitoring as well as phase control of the drum with the phase difference between the synchronisation signals separated from the input and the reproduced signals.

According to the present invention, as defined in claim 1, a video signal recording/reproducing apparatus comprises a rotary drum having at least one recording head thereon for recording input video signals on a video tape and at least one reproducing head thereon for reproducing recorded video signals; first and second synchronous separation means for obtaining synchronous signals from the input and reproduced video signals, respectively; means for detecting the phase difference between the synchronous signals obtained by the first and second synchronous signal separation means; and phase control means which employs the detected phase difference between said synchronous signals to synchronise the synchronous signal of the input signal with the synchronous signal of the recorded signal; characterised by said reproducing head being staggered from the recording head in the direction of rotation of the drum; and by memory means for storing a difference signal representing the angle of stagger between the recording and reproducing heads on the drum, said phase control means also employing the stored difference signal thereby compensating for the phase difference caused by the angle of stagger of the recording and reproducing heads.

In order that the invention may be more readily understood, it will now be described, by way of example only, with reference to the accompanying drawings, in which:-
Figure 1 is a block diagram showing a first embodiment of the present invention;
Figure 2 is a diagram showing a mounting arrangement of the recording heads and the reproducing heads on the rotary drum of Figure 1;
Figure 3 is a diagram for explaining an editing operation in the first embodiment;
Figure 4 is a block diagram showing a second embodiment of the present invention;
Figure 5 is a block diagram showing a third embodiment of the present invention;
Figure 6 is a timing chart for explaining an operation in the time difference measuring mode of the third embodiment; and
Figure 7 is a block diagram showing a fourth embodinent of the present invention.

According to the present invention, phase continuity of video signals before and after the editing start point on a magnetic tape is obtained at the time of editing in the following manner. The relationship between the phases of input video signals and the rotation of the rotary drum is controlled on the basis of synchronous signals separated from video signals reproduced by the reproducing head during the reproduction period before the editing start point and synchronous signals separated from input video signals to be recorded.

At this time, a time difference between when the recording heads and the reproducing heads contact the same position on the magnetic tape is measured and stored. That time difference is attributable to the difference in mounting angles of the recording heads and the reproducing heads, which are inherent in the VTR apparatus. This time difference is used to control operation of the phase control means and phases of synchronous signals separated from input video signals are shynchronized with phases of synchronous signals separated from reproduced video signals using the time difference. As a result, the relationship between the phase of input video signals and the rotation of the rotary drum is optimized. Even on a video signal recording/reproducing apparatus that does not reproduce signals using the recording heads, phase continuity of video signals before and after the editing start point on a magnetic tape is obtainable similar to a VTR which reproduces signals from a magnetic tape by use of the recording heads.

In order to store the above-mentioned time difference data in a memory means, when the VTR is in the recording state, video signals are reproduced by the reproducing heads immediately after the signals are recorded on a tape by the recording heads. A switching means provided at the input side of the demodulation means selects signals reproduced by the reproducing heads and modulated input video signals and supplies the selected signals to the demodulation means. With this switching operation, signals demodulated from modulated input video signals and video signals demodulated from reproduced signals appear alternately as output signals from the demodulation means. Then, synchronous signals are separated from both these output signals of the demodulation means and supplied to the time difference measuring means. Thus, a time difference between synchronous signals of input video signals and synchronous signals of reproduced video signals is measured and the result is stored.

Various embodiments of the present invention will be explained hereinafter referring to the attached drawings.

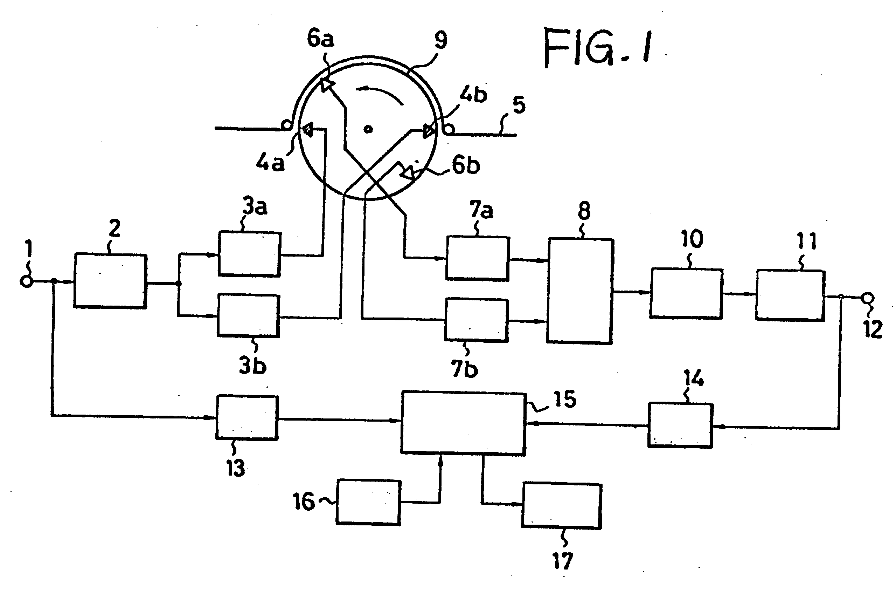

FIGURE 1 is a block diagram showing the construction of the invention relative to editing of video signals, which is an essential part of a video signal recording/reproducing apparatus related to the first embodiment of this invention.

The apparatus of this invention is a helical scanning type VTR so designed that a magnetic tape, the recording medium, is wound round a rotary drum over a range of angle somewhat wider than 180°. FM modulated video signals are recorded on this magnetic tape by a pair of recording heads provided at positions opposing each other by 180° on the rotary drum, and signals recorded on a magnetic tape are reproduced by a pair of reproducing heads mounted at positions staggered in the rotating direction from the recording heads on the rotary drum.

In FIGURE 1, input video signals that were input into the video input terminal 1 are FM modulated in the FM modulation circuit 2. Then, these FM video signals are recorded on the magnetic tape 5 by recording current supplied to the recording heads 4a and 4b through a rotary transformer (not illustrated) from the recording amplifiers 3a and 3b.

When the VTR is in the reproducing state, the signals reproduced from the magnetic tape 5 by the reproducing heads 6a and 6b are led to the pre-amplifiers 7a and 7b through the rotary transformer (not illustrated) and after amplification are input into a heads switching circuit 8. As output signals from the pre-amplifiers 7a and 7b are intermittent signals that are obtainable only in the period of about one half rotation on the rotary drum 9, the heads switching circuit 8 outputs a series of continuous signals by switching output signals from the pre-amplifiers 7a and 7b at very 180°.

The output signal from the heads switching circuit 8, after compensation of its frequency characteristic by the equalizer 10, is fed to the FM demodulation circuit 11, where it is demodulated into a video signal, and output from the video output terminal 12. The synchronous separator 13, the first synchronous separation means, separates synchronous signals from the input video signals that are input into the video input terminal 1 and sends then to the editing phase control circuit 15. The synchronous separator 14, the second synchronous separation means, separates synchronous signals from the reproduced video signal that is demodulated in the modulation circuit 11 and sends it to the editing phase control circuit 15.

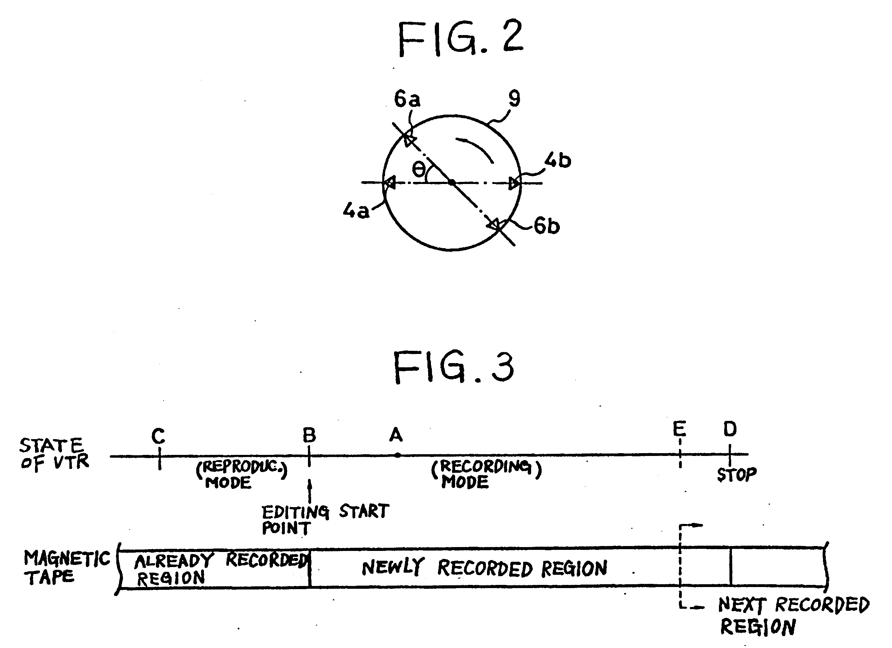

A memory 16 stores in advance data on the time difference (identified as ΔT) between when the recording heads 4a (4b) and the reproducing heads 6a (6b) each contact the same position on the magnetic tape 5 at a steady rotational speed of the rotary drum 9. This time difference ΔT depends on the mounting angle difference ϑ between the recording heads 4a and the reproducing heads 6a or the recording heads 4b and the reproducing heads 6b to the rotary drum 9 as shown in FIGURE 2. The time difference data ΔT stored in the memory 16 is given to the editing phase control circuit 15 at the time of the editing as data for correction. ROM (Read Only Memory), battery backed up RAM (Random Access Memory) or DIP switch can be used for the memory 16.

The output signal from the editing phase control circuit 15 is supplied to the rotary drum servo circuit 17 and is used to control the rotation of the rotary drum 9 at the time of editing. Next, the operation of a VTR according to this embodiment during editing is explained referring to FIGURE 3. FIGURE 3 is a diagram for explaining the editing operation called "assemble editing" that is most often used, and shows the relation between the operation mode of the VTR and areas on a magnetic tape in the respective operation mode of the VTR. Assemble editing is an editing method to record video signals and audio signals connected to the input terminal of a VTR successively on the magnetic tape by superposing a portion to be newly recorded on a previously recorded portion.

Now, assuming that a VTR is stopped in the operation mode shown at the point A in FIGURE 3 and the editing start point is desired to be the point B. If an editing execution command is given, the magnetic tape 5 is at once wound back automatically to the point C and the VTR is put in the reproducing mode. When the recording heads have reached the point B on the magnetic tape the VTR is switched from the reproducing mode to the recording mode and video signals or audio signals that are input into the input terminal of the VTR are recorded on the magnetic tape.

When the recording heads have reached the point D on the magnetic tape, the VTR stops the recording and running of the magnetic tape. Then, the point E is selected as the next editing start point and the assemble editing is carried out by repeating the above described similar operation. This operation is controlled based on a count value of a tape timer that is not illustrated.

The reproducing period from the point B to the point C is called the pre-roll period. In this pre-roll period, the editing phase control circuit 13 sends a phase control signal to the rotary drum servo circuit 17 for controlling the rotation of the rotary drum based on synchronous signals from the synchronous separators 13 and 14. This phase control signal corresponds to the corrected time difference caused by the mounting angle difference ϑ between the recording heads and the reproducing heads in the rotary drum 9 as shown in FIGURE 2. This is generated according to the time difference ΔT pre-stored in the memory 16. That is, assuming that the timing of synchronous signals from the synchronous separator 13 is to be t₁ and that of synchronous signals from the synchronous separator 14 is to be t₂, the phase control signal sent from the editing control circuit 15 is a signal corresponding to a phase difference t₁ + ΔT - t₂, between t₁ + ΔT and t₂, and the rotating phase of the rotary drum 9 is so controlled that this phase difference becomes 0.

As a result, the rotation of the recording heads 4a and 4b is optimized for input video signals that are input through the video signal input terminal and are to be recorded, that is, the phases of video signals to be newly recorded by the recording heads and that of the already recorded video signals before and after the editing start point B on the magnetic tape 5 shown in FIGURE 3 are so controlled that they become continuous.

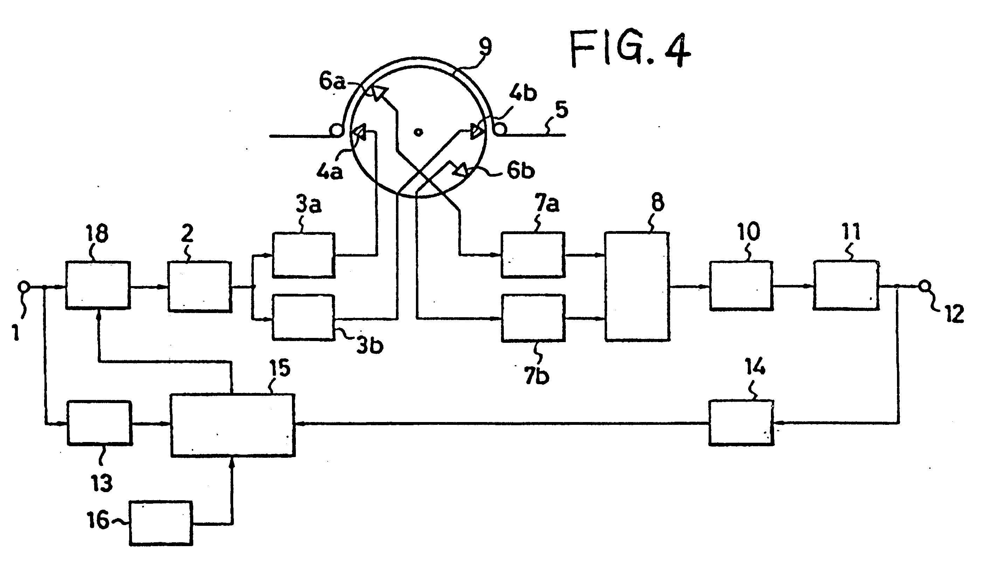

FIGURE 4 is the block diagram showing the second embodiment of the present invention, with the same numbers assigned to the parts corresponding to those shown in FIGURE 1. The second embodiment differs from the first embodiment in that the relationship between input video signals to be recorded and rotation of the rotary drum 9 is controlled by controlling a variable delay circuit provided to delay video signals input to the video signal input terminal 1, and not by changing the rotation of the rotary drum 9. That is, the phase control signal that is output from the editing control circuit 15 is given to the variable delay circuit 18 as a delay time control signal.

The variable delay circuit 18 is made up, for instance, using a semiconductor memory. Video signals being input are written into the memory after being digitized by, for instance, an A/D converter, and are read and outpt after being converted to analogue signals by a D/A converter. What is necessary in this case is that the editing phase control circuit 15 controls the write timing to a semiconductor memory according to the timing t₁ of the synchronous signals separated from the input video signals by the synchronous separator 13 and controls the read timing from, the semiconductor memory according to a timing that is shifted from the timing t₁ of the synchronous signals separated from the video signals reproduced from a position immediately before the editing start point by the synchronous separator 14 by the time difference ΔT stored in the memory 16. That is, it is sufficient to write video signals at the timing t₁ and read at the timing t₂ - ΔT.

As the delay time control in the variable delay circuit 18 is executed very quickly and its control accuracy is higher than the rotating phase control of the rotary drum 9, the embodiment shown in FIGURE 4 is excellent in response speed and phase control accuracy.

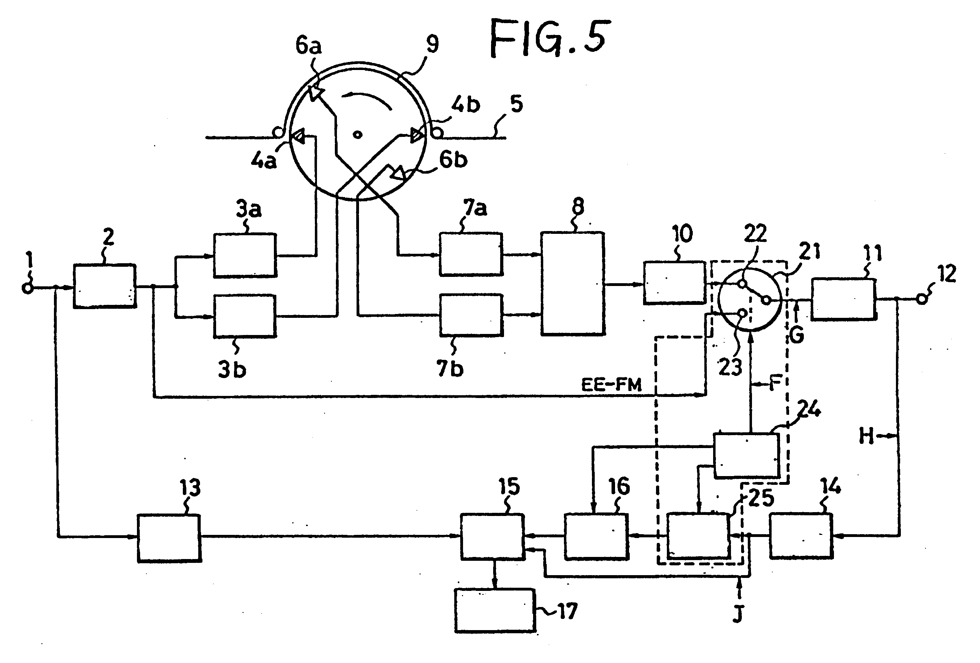

FIGURE 5 is the block diagram showing a third embodiment of the present invention, which includes a means to measure a time difference to be stored in the memory 16. In this embodiment, the reproduced signal that is output from the heads switching circuit 8 is connected to the "TAPE" side terminal 22 of a switching circuit 21 after compensation of the frequency characteristic is made by the equalizer 10. The "EE" side terminal 23 of the switching circuit 21 is connected with the output terminal of the FM modulation circuit 2.

The operation of the switching circuit 21 is controlled by the measuring control circuit 24. In the so-called simultaneous reproduction mode, i.e., to monitor the recording state at the time of recording, the "TAPE" side terminal 22 is selected. During normal recording, the "EE" side terminal 23 is selected.

If a VTR operator selects "Time Difference Measuring Mode", the mesuring control circuit 24 gives a pulse signal, synchronized with the rotary drum 9, to the switching circuit 21. As a result, the switching circuit 21 selects input video signals to be recorded and reproduced signals alternately and outputs them to the FM demodulation circuit 11. The reproduced video signals demodulated in the FM demodulation circuit 11 are sent to the video output terminal 12 and at the same time, input into the synchronous separator 14. The synchronous signals separated by the synchronous separator 14 are also supplied to the time difference measuring circuit 25.

The time difference measuring circuit 25 is made up using a digital counter and measures the time difference between the synchronous signals in the input video signals supplied from the synchronous separator and the synchronous signals in the reproducing video signals based on the control signal and clock signal from the measuring control circuit 24.

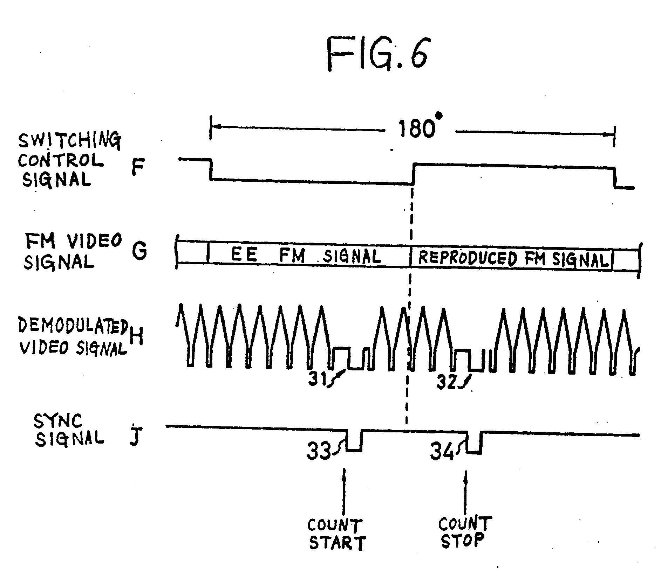

FIGURE 6 is a timing chart showing the waveforms of the parts having symbols F-J in FIGURE 5 in "Time Difference Measuring Mode". F denotes the switching control signal that controls the switching operation of the switching circuit 21, G denotes the FM video signal that is output from the switching circuit 21, H denotes the video signal demodulated in the FM demodulation circuit 11, and J denotes the synchronous signals separated by the synchronous separator 13.

The switching control signal F is a square wave signal of which one period is the time required for the rotary drum 9 to turn 180° and is inversed close to the middle the time between when the recording heads recorded the vertical synchronous signals of input video signal and the reproducing heads reproduced the same vertical synchronous signals. In this embodiment, since the mounting angle difference ϑ between the recording heads 4a or 4b and the reproducing heads 6a or 6b is about 45°, the switching control signal F is inversed about 22.5° after the recording heads recorded the vertical synchronous signals.

The FM video signal G becomes the recorded FM signal (EE-FM) when the switching control signal F is at low level, while it becomes the reproduced FM signal at high level. The video signal H is the demodulated FM video signal G, 31 denotes the vertical synchronous signals in the input video signals, and 32 denotes the synchronous signals on the reproduced video signals. The synchronous signals J shows the vertical synchronous signals separated from the video signal H. 33 denotes the vertical synchronous signals in the input video signals, and 34 denotes the vertical synchronous signals in the reproduced video signals.

The time difference measuring circuit 25 measures the time from the fall of the vertical synchronous signals 33 to the fall of the vertical synchronous signals 34 by counting clock signals from the measuring control circuit 24. The time measured in the time difference measuring circuit 25 is sent to the memory 16 and stored there at the fall of the switching control signal F.

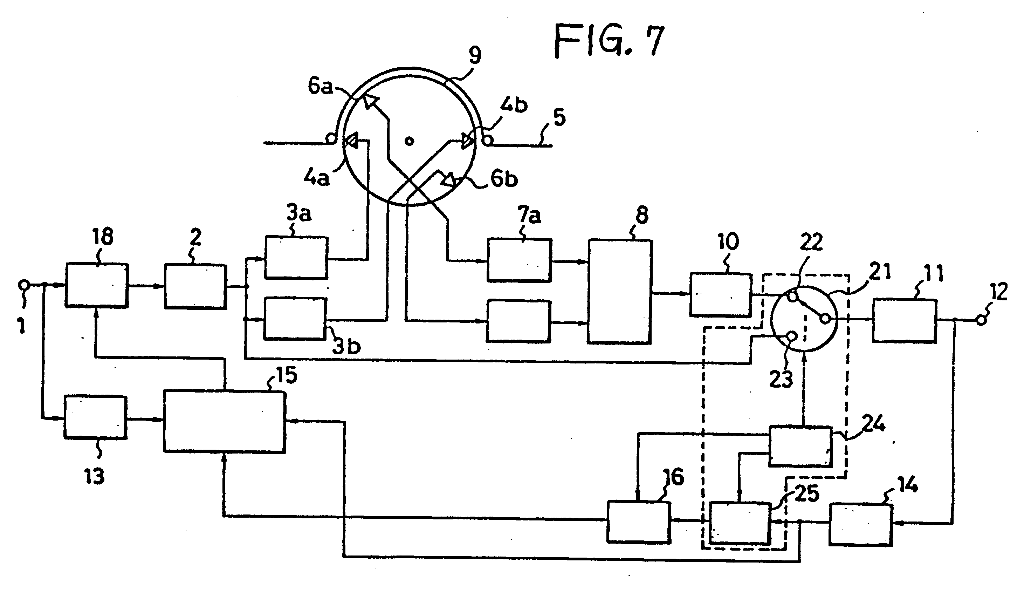

FIGURE 7 is the block diagram showing the fourth embodiment of the present invention and is identical to the embodiment shown in FIGURE 5 except that the relation between the phase of the input video signal to be recorded and the rotating phase of the rotary drum 9 is controlled by controlling the delay time of the variable delay circuit 18 as in the emboidment shown in FIGURE 4.

It is also possible to make the switching circuit 21, the measuring control circuit 24 and the time difference measuring circuit 25, all encircled with the broken lines in FIGUREs. 5 and 7, an independent unit that is removable from the VTR. An operator may then set this module in a VTR and after writing time difference data in the memory 16, remove it. If each VTR is equipped with the switching circuit 21, it is better make the measuring control circuit 24 and the time difference measuring circuit 25 only modules.

If these parts are made as modules, as mentioned above, it becomes unnecessary to incorporate them into each VTR and therefore, it becomes possible to make VTRs small in size and cheap in price. In addition, it becomes possible to correct for variances in mounting angle differences between the recording heads and the reproducing heads of each VTR and to write more accurate time difference data in the memory 16. Further, if the variance in mounting angle difference between the recording heads and the reproducing heads of each VTR is negligible, time difference data common to each VTR may be written into the memory 16.

Further, it is possible to use the time difference data stored in the memory 16 for applications other than phase control at the time of editing. For instance, it may be used for phase adjustment of the tachometer pulse of the rotary drum, control track position adjustment, etc. when adjusting VTR.

Furthermore, in the above-mentioned embodiments, either of the rotation of the rotary drum 9 or the delay time of the variable delay circuit 18 is controlled, but it is also possible to control both of them.

According to the present invention, it is possible to optimize the phase relation between signals to be recorded and the recording heads in a VTR which has separate record and reproduce heads at the time of editing similar to VTRs that are capable of reproducing signals on a magnetic tape by the recording heads. This helps to reduce discontinuity of the phases of video signals before and after the editing point on a magnetic tape.

## Claims

1. A video signal recording/reproducing apparatus comprising a rotary drum (9) having at least one recording head (4) thereon for recording input video signals on a video tape and at least one reproducing head (6) thereon for reproducing recorded video signals; first and second synchronous separation means (13, 14) for obtaining synchronous signals from the input and reproduced video signals, respectively; means (15) for detecting the phase difference between the synchronous signals obtained by the first and second synchronous signal separation means; and phase control means which employs the detected phase difference between said synchronous signals to synchronise the synchronous signal of the input signal with the synchronous signal of the recorded signal; characterised by said reproducing head being staggered from the recording head in the direction of rotation of the drum; and by memory means (16) for storing a difference signal representing the angle of stagger between the recording and reproducing heads on the drum, said phase control means also employing the stored difference signal thereby compensating for the phase difference caused by the angle of stagger of the recording and reproducing heads.

2. Apparatus as claimed in claim 1, in which the phase control means delays the input video signals.

3. Apparatus as claimed in claim 1, in which the phase control means controls the rotation of the rotary drum.

4. Apparatus as claimed in claim 1, 2 or 3, in which the memory means stores a time difference signal which represents the time delay for a given location on a video tape to pass between the reproducing and recording heads.

5. Apparatus as claimed in any preceding claim, in which there are a pair of recording heads spaced apart by 180°.

6. Apparatus as claimed in any preceding claim, in which there are a pair of reproducing heads spaced apart by 180°.

7. Apparatus as claimed in claim 2, in which a variable delay means delays the input video signals and the phase control means controls the variable delay means.

8. Apparatus as claimed in claim 1, including recording means for providing recording signals to the recording head in response to the input video signals; demodulation means for demodulating signals reproduced by the reproducing head to generate reproduced video signals; and switching means for selectively switching the said recorded signals and the reproduced signals to the demodulating means, so as to measure said difference signal.

9. Apparatus as claimed in any preceding claim, in which the first and second synchronous separation means separate vertical synchronous signals, respectively.

## Patentansprüche

1. Videosignal-Aufzeichnungs-/Wiedergabe-Gerät mit einer drehbaren Trommel (9), die mindestens einen Aufzeichnungskopf (4) zum Aufzeichnen von Eingangsvideosignalen auf einem Videoband und mindestens einen Wiedergabekopf (6) zum Wiedergeben von aufgezeichneten Videosignalen besitzt; mit ersten und zweiten Synchrontrennmitteln (13, 14) zum Ableiten von Synchronsignalen aus den Eingangsvideosignalen und den wiedergegebenen Videosignalen; mit Mitteln (15) zum Erkennen der Phasendifferenz zwischen den Synchronsignalen, die von den ersten und zweiten Synchronsignal-Trennmitteln erhalten wurden; und mit einem Phasensteuermittel, welches die erkannte Phasendifferenz zwischen den Synchronsignalen einsetzt, um das Synchronsignal des Eingangssignals mit dem Synchronsignal des aufgezeichneten Signals zu synchronisieren, **dadurch gekennzeichnet**, daß der Wiedergabekopf gegenüber dem Aufzeichnungskopf in Drehrichtung der Trommel versetzt ist; und durch Speichermittel (16) zum Speichern eines Differenzsignals, das den Versatzwinkel zwischen dem Aufzeichnungskopf und dem Wiedergabekopf auf der Trommel darstellt, wobei das Phasensteuermittel außerdem das gespeicherte Differenzsignal heranzieht und dadurch die Phasendifferenz ausgleicht, die durch den Versatzwinkel des Aufzeichnungs- und Wiedergabekopfs verursacht ist.

2. Gerät nach Anspruch 1, wobei das Phasensteuermittel die Eingangsvideosignale verzögert.

3. Gerät nach Anspruch 1, wobei das Phasensteuermittel die Drehung der drehbaren Trommel steuert.

4. Gerät nach Anspruch 1, 2 oder 3, wobei das Speichermittel ein Zeitdifferenzsignal speichert, welches die Zeitverzögerung darstellt, in der eine vorgegebene Stelle auf dem Videoband von dem Wiedergabekopf zu dem Aufnahmekopf läuft.

5. Gerät nach einem der vorhergehenden Ansprüche, wobei ein Paar von Aufzeichnungsköpfen um 180° beabstandet ist.

6. Gerät nach einem der vorhergehenden Ansprüche, wobei ein Paar von Wiedergabeköpfen um 180° beabstandet ist.

7. Gerät nach Anspruch 2, wobei eine variable Verzögerungseinrichtung die Eingangsvideosignale verzögert und wobei das Phasensteuermittel die variable Verzögerungseinrichtung steuert.

8. Gerät nach Anspruch 1 mit einem Aufzeichnungsmittel zum Erzeugen von Aufzeichnungssignalen für den Aufzeichnungskopf in Abhängigkeit von den Eingangsvideosignalen; mit einem Demodulationsmittel zum Demodulieren von Signalen, die von dem Wiedergabekopf wiedergegeben werden, um reproduzierte Videosignale zu erzeugen; und mit Schaltmitteln zum selektiven Anlegen der aufgezeichneten Signale und der reproduzierten Signale an das Demoduliermittel, um das Differenzsignal zu messen.

9. Gerät nach einem der vorhergehenden Ansprüche, wobei das erste und zweite Synchrontrennmittel die Vertikalsynchronsignale trennt.

## Revendications

1. Appareil pour enregistrer et reproduire des signaux vidéo qui comprend un tambour rotatif (9) comportant, au moins, une tête d'enregistrement (4) pour inscrire des signaux d'entrée vidéo sur une bande vidéo et, au moins, une tête de lecture (6) pour restituer les signaux vidéo enregistrés; des premiers et des seconds moyens de séparation synchrones (13, 14) pour obtenir, respectivement, des signaux synchrones à partir des signaux vidéo d'entrée et reproduits; des moyens (15) pour détecter la différence de phases entre les signaux synchrone obtenus par les premiers et les seconds moyens de séparation des signaux synchrones; et des moyens de commande de phase qui utilisent la différence de phases détectée entre lesdits signaux synchrones pour synchroniser le signal synchrone du signal d'entrée avec le signal synchrone du signal enregistré; caractérisé en ce que ladite tête reproductrice ou de lecture est décalée de la tête d'enregistrement dans le sens de la rotation du tambour; et par des moyens de mémorisation (16) pour conserver un signal de différence représentant l'angle de décalage, sur le tambour, entre les têtes d'enregistrement et de reproduction ou de lecture, lesdits moyens de commande de phase utilisant aussi le signal de différence mémorisé pour compenser la différence de phase due à l'angle de décalage des têtes d'enregistrement et de lecture.

2. Appareil selon la revendication 1, caractérisé en ce que les moyens de commande de phase retardent les signaux d'entrée vidéo.

3. Appareil selon la revendication 1, caractérisé en ce que les moyens de commande de phase commandent la rotation du tambour.

4. Appareil selon l'une quelconque des revendications 1, 2 ou 3 caractérisé en ce que la mémoire conserve un signal de différence de temps qui représente le délai nécessaire à un emplacement déterminé de la bande vidéo pour passer entre les têtes de lecture et d'enregistrement.

5. Appareil selon l'une quelconque des revendications précédentes, caractérisé en ce qu'il possède deux têtes d'enregistrement espacées de 180°.

6. Appareil selon l'une quelconque des revendications précédentes, caractérisé en ce qu'il comprend deux têtes de lecture ou de reproduction espacées de 180°.

7. Appareil selon la revendication 2, caractérisé en ce qu'il comprend des moyens de retard valables qui retardent les signaux vidéo d'entrée, et des moyens de commande de phase qui commandent lesdits moyens de retard variables.

8. Appareil selon la revendication 1, caractérisé par des moyens d'enregistrement pour fournir des signaux d'enregistrement à la tête d'enregistrement en réponse aux signaux vidéo d'entrée; des moyens de démodulation pour démoduler les signaux reproduits par la tête de lecture afin de générer des signaux vidéo reproduits; et des moyens de commutation pour commuter sélectivement lesdits signaux enregistrés et les signaux reproduits vers les moyens de commutation, afin de mesurer ainsi ledit signal de différence.

9. Appareil selon l'une quelconque des revendications précédentes, caractérisé en ce que le premier et le second moyens de séparation synchrones séparent, respectivement, des signaux synchrones verticaux.
